# EUROPÄISCHE PATENTSCHRIFT

(11) **EP 2 531 370 B1**
(45) Veröffentlichungstag und Bekanntmachung des Hinweises auf die Patenterteilung: **22.01.2014**
(21) Anmeldenummer: 11705153.2
(22) Anmeldetag: 01.02.2011
(51) Int. Cl.: B60N 2/20, B60N 2/22

(54) **SCHUTZABDECKUNG FÜR EINEN SITZVERSTELLMECHANISMUS**
PROTECTIVE COVER FOR A SEAT ADJUSTING MESCHANISM
COUVERTURE DE PROTECTION POUR UN DISPOSITIF DE RÉGLAGE DE SIÈGE

(30) Priorität: 04.02.2010 DE 102010006933
(43) Veröffentlichungstag der Anmeldung: 12.12.2012
(73) Patentinhaber: Johnson Controls GmbH, 51399 Burscheid (DE)
(72) Erfinder: MUSSMANN, Christian, 53757 Sankt Augustin (DE)
(74) Vertreter: Schwöbel, Thilo K.
(86) Internationale Anmeldenummer: PCT/EP2011/000440
(87) Internationale Veröffentlichungsnummer: WO 2011/107192

(56) Entgegenhaltungen:
- DE-A1- 1 925 778

## Beschreibung

Die vorliegende Erfindung betrifft einen Fahrzeugsitz mit einer Rückenlehne, die mittels eines Verstellmechanismus schwenk- und/oder drehbar an einem Sitzteil angeordnet ist.

Derartige Fahrzeugsitze sind aus dem Stand der Technik beispielsweise der DE-A-1925778 hinlänglich bekannt und weisen ein Sitzteil und eine Rückenlehne auf. Die Rückenlehne ist mittels eines Verstellmechanismus schwenk- und/oder drehbar an dem Fahrzeugsitz vorgesehen. Dieser Verstellmechanismus stellt oftmals ein Verletzungsrisiko dar.

Es war deshalb die Aufgabe der vorliegenden Erfindung einen Fahrzeugsitz zur Verfügung zu stellen, der die Nachteile des Standes der Technik nicht aufweist.

Gelöst wird die Aufgabe mit einem Fahrzeugsitz mit einer Rückenlehne, die mittels eines Verstellmechanismus schwenk- und/oder drehbar an einem Sitzteil angeordnet ist, wobei der Verstellmechanismus mit einer Abdeckung abgedeckt ist und die Abdeckung zweiteilig vorgesehen ist, wobei ein erster Teil aus einem vergleichsweise harten Kunststoffmaterial und ein zweiter Teil aus einem vergleichsweise weichen Kunststoffmaterial gefertigt ist.

Die vorliegende Erfindung betrifft einen Fahrzeugsitz mit einer Rückenlehne, die mittels eines Verstellmechanismus schwenk- und/oder drehbar an einem Sitzteil angeordnet ist. Diese Fahrzeugsitze können einer oder mehreren Personen Platz bieten und sich in unterschiedlichen Sitzreihen befinden, wobei der Fahrzeugsitz der hier vorliegenden Erfindung sich vorzugsweise in der dritten Sitzreihe befindet. Besonders bevorzugt handelt es sich demnach um einen sogenannten Notsitz, der nur dann vonnöten ist, wenn mehr Personen in dem Kraftfahrzeug Platz finden müssen, als Sitze in den ersten beiden Sitzreihen zur Verfügung stehen.

Bei dem erfindungsgemäßen Fahrzeugsitz ist die Rückenlehne gegenüber dem Sitzteil verschwenk und/oder drehbar, beispielsweise zur Komfortverstellung, insbesondere jedoch um die Rückenlehne von einer Gebrauchsstellung, in der sie sich im Wesentlichen senkrecht zum Sitzteil befindet, in eine Verstaustellung, bei der sie sich parallel zum Sitzteil befindet, zu verbringen. Dazu ist zwischen dem Sitzteil und der Rückenlehne ein Versellmechanismus vorgesehen.

Erfindungsgemäß ist dieser Verstellmechanismus mit eine Kunststoffabdeckung versehen. Diese Abdeckung befindet sich insbesondere in einem Bereich, der parallel zu der Anlagefläche der Rückenlehne, an der der Rücken des Sitzinsassen anliegt und/oder des Sitzteils, an der das Gesäß des Sitzinsassen anliegt, angeordnet ist. Vorzugsweise ist die Abdeckung gekrümmt vorgesehen.

Erfindungsgemäß weist die Abdeckung zwei Teile aus unterschiedlichen Kunststoffmaterialien auf, wobei ein Teil aus einem vergleichsweise harten und ein Teil aus einem vergleichsweise weichen Kunststoffmaterial gefertigt ist.

Ein vergleichsweise hartes Kunststoffmaterial ist formstabil und nur unter Einsatz von vergleichsweise hohen Kräften deformierbar. Das vergleichsweise harte Kunststoffmaterial weist bei 20°C eine vergleichsweise geringe Elastizität auf, d.h. die elastische Verformbarkeit ist relativ gering. Werden vergleichsweise hohe Kräfte eingesetzt, verformt sich das vergleichsweise harte Kunststoffmaterial sehr schnell plastisch. Das vergleichsweise harte Kunststoffmaterial ist beispielsweise ein Thermoplast.

Ein vergleichsweise weiches Kunststoffmaterial ist ebenfalls formstabil, kann aber in sehr weiten Bereichen elastisch verformt werden, d.h. es nimmt seine ursprüngliche Form an, sobald die Verformungskraft nicht mehr vorhanden ist. Insbesondere ist das vergleichsweise weiche Kunststoffmaterial elastischer als das vergleichsweise harte Kunststoffmaterial. Es muss aber so hart sein, dass eine Verletzung des Sitzinsassen im Normalbetrieb sicher vermieden wird. Das vergleichsweise weiche Kunststoffmaterial ist beispielsweise Gummi oder ein gummiähnlicher Werkstoff. Ein anderes Beispiel für einen weichen Werkstoff ist ein schaumartiges Kunststoffmaterial.

Beide Teile weisen vorzugsweise eine vergleichsweise geringe Materialstärke auf.

Die Abdeckung besteht vorzugsweise zum größten Teil aus dem harten Kunststoffmaterial. Vorzugsweise weist das Teil, das aus dem vergleichsweise harten Kunststoffmaterial gefertigt ist, eine Ausnehmung auf, in der vorzugsweise das Teil aus dem vergleichsweise weichen Kunststoff angeordnet wird.

Diese beiden Teile können kraft-, form-und/oder stoffschlüssig miteinander verbunden sein.

Vorzugsweise ist in dem Teil, das aus dem vergleichsweise weichen Kunststoff gefertigt ist, ein Schlitz, vorzugsweise ein T-förmiger Schlitz, vorgesehen.

Vorzugsweise weist das Teil, das aus dem vergleichsweise weichen Kunststoff gefertigt ist, mindestens eine, vorzugsweise zwei Laschen auf. Diese Lasche kann sich dann, beispielsweise beim Verstellen der Rückenlehne, reversibel verformen.

Vorzugsweise ist an dem Teil, das aus dem vergleichsweise weichen Kunststoff gefertigt ist, mindestens eine Rippe, insbesondere eine Versteifungsrippe, vorgesehen.

Vorzugsweise ist das Teil, das aus dem vergleichsweise weichen Kunststoff gefertigt ist, vorgespannt in dem Teil vorgesehen. Bei dieser bevorzugten Ausführungsform der vorliegenden Erfindung kann das Teil, das aus dem vergleichsweise weichen Kunststoff gefertigt ist, reibschlüssig mit dem anderen Teil, das aus dem vergleichsweise harten Kunststoff gefertigt ist, verbunden werden.

Vorzugsweise weist der Verstellmechanismus einen Verriegelungsbolzen auf, der beim Verstellen der Rückenlehne aus dem Teil der Abdeckung, das aus dem vergleichsweise harten Kunststoff gefertigt ist, heraustritt. Dabei verformt der Verriegelungsbolzen vorzugsweise die Laschen des vergleichsweise weichen Teils reversibel.

Im Folgenden wird die Erfindung anhand der Figuren 1 bis 4 erläutert. Diese Erläuterungen sind lediglich beispielhaft und schränken den allgemeinen Erfindungsgedanken nicht ein.
- **Figur 1**: zeigt den erfindungsgemäßen Fahrzeugsitz,
- **Figur 2**: zeigt eine erste Ausführungsform der Abdeckung,
- **Figur 3**: zeigt eine zweite Ausführungsform der Abdeckung und
- **Figur 4**: zeigt eine weitere Ausführungsform der Abdeckung.

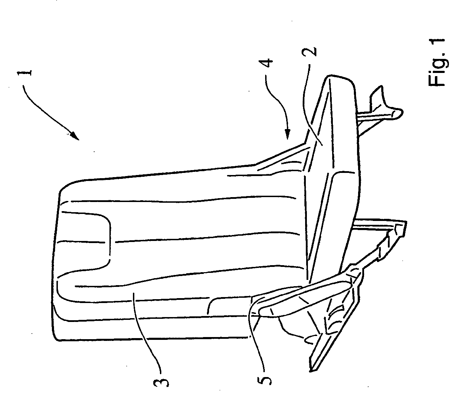

Figur 1 zeigt den erfindungsgemäßen Fahrzeugsitz 1, der ein Sitzteil 2 und eine Rückenlehne 3 aufweist. Die Rückenlehne 3 ist mittels eines Verstellmechanismus 4, insbesondere von der dargestellten Gebrauchs- in eine Verstauposition, in der sich die Rückenlehne im Wesentlichen parallel zum Sitzteil befindet, verbringbar. Dieser Verstellmechanismus 4 ist mit einer Abdeckung 5 versehen, um zu verhindern, dass sich eine Person an dem Verstellmechanismus verletzt. Da der Verstellmechanismus in dem vorliegenden Fall einen Verriegelungsbolzen aufweist, der sich vor, bei und/oder nach dem Verstellen der Rückenlehne hin und her bewegen muss, weist die Abdeckung eine Ausnehmung, ein Fenster, auf, durch das der Bolzen aus der Abdeckung 5 bedarfsweise hervortreten kann.

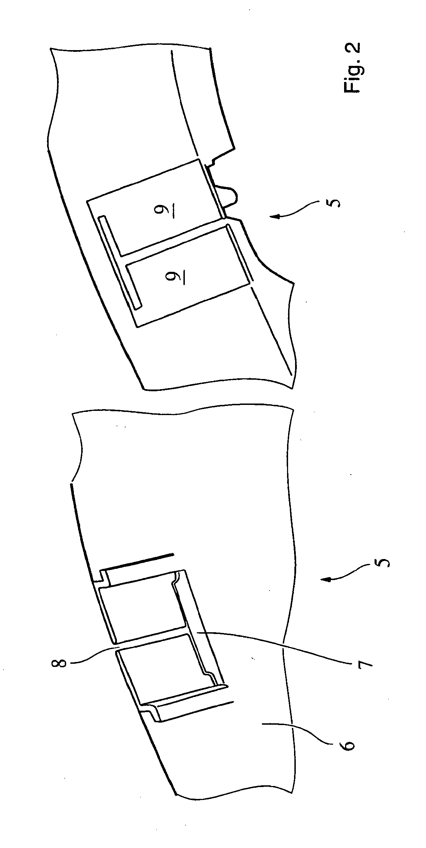

Figur 2 zeigt eine erste Ausführungsform der Abdeckung 5. Die Abdeckung 5 besteht im Wesentlichen aus einem Teil 6, das aus einem vergleichsweise harten Kunststoffmaterial gefertigt ist. Im Bereich des Fensters ist ein Teil 7 aus einem weicheren Kunststoffmaterial, insbesondere einem gummiartigen Kunststoffmaterial angeordnet, das vorzugweise stoffschlüssig mit dem Kunststoffmaterial des Teils 6 verbunden ist. Dieser Stoffschluss wird beispielsweise durch Kleben und/oder dadurch erreicht werden, dass beide Kunststoffmaterialien in einem Herstellungsprozess eingesetzt werden und sich beim Aushärten miteinander verbinden. Das Teil 7 weist vorzugsweise einen Schlitz 8, insbesondere einen T-förmigen Schlitz auf, wodurch sich zwei Laschen 9 ergeben, die das Aus- und Eintreten des Bolzens (nicht dargestellt) durch die Abdeckung begünstigen. Die Laschen verbiegen sich dabei elastisch.

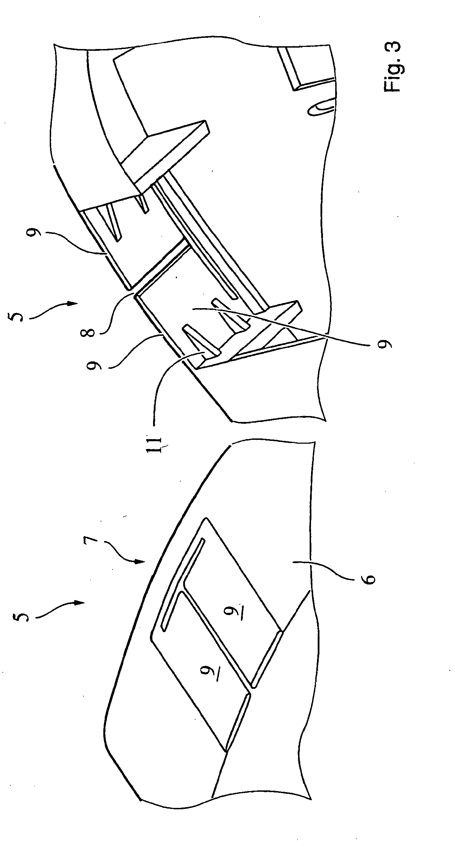

Figur 3 zeigt im Wesentlichen die Abdeckung gemäß Figur 2, wobei in dem vorliegenden Fall das Kunststoffteil 7 Rippen 11 aufweist, die das Kunststoffteil 7 versteifen. Die Verbindung zwischen dem Kunststoffteil 7 und dem Kunststoffteil 6 erfolgt in dem vorliegenden Fall vorzugsweise durch Reibschluss insbesondere dadurch, dass das Teil 7 gegen das Teil 6 vorgespannt ist. Die Vorspannung wird durch die Rippen 11 begünstigt, die dem Teil 7 eine zusätzliche Steifigkeit geben.

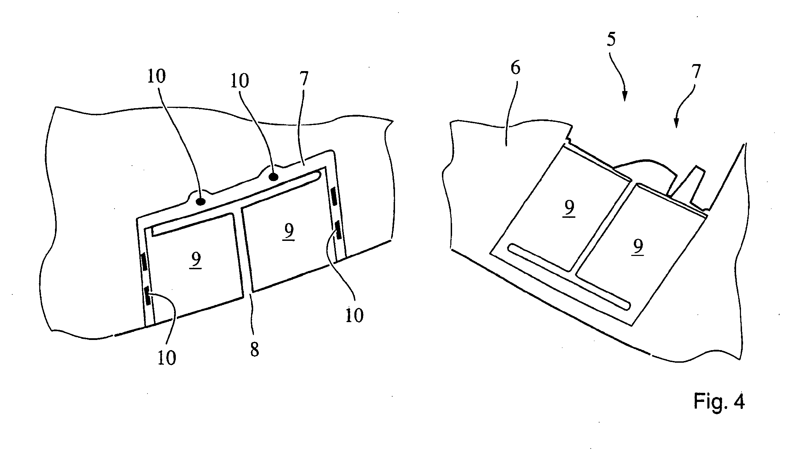

Figur 4 zeigt eine weitere Ausführungsform der Abdeckung. In dem vorliegenden Fall ist das Kunststoffteil 7 mittels Schweißpunkten, d.h. stoffschlüssig, mit dem Kunststoffteil 6 verbunden. Die Verbindungstellen 10 können jedoch auch formschlüssig ausgebildet sein, beispielsweise dadurch, dass Ausnehmungen in dem Kunststoffteil 7 vorhanden sind, durch die beispielsweise Pinne 10 des Kunststoffteils 6 durchgesteckt werden. Ansonsten wird auf die Ausführungen zu den Figuren 2 und 3 verwiesen.

### Bezugszeichenliste:

- 1: Fahrzeugsitz
- 2: Sitzteil
- 3: Rückenlehne
- 4: Verstellmechanismus
- 5: Abdeckung des Verstellmechanismus 4
- 6: erstes Kunststoffmaterial, vergleichsweise harter Kunststoff, erstes Kunststoffteil
- 7: zweites Kunststoffmaterial, vergleichsweise weicher Kunststoff, zweites Kunststoffteil
- 8: Schlitz
- 9: Lasche
- 10: Verbindungsstellen, Schweißpunkte
- 11: Steg, Rippe

## Patentansprüche

1. Fahrzeugsitz (1) mit einer Rückenlehne (3), die mittels eines Verstellmechanismus (4) schwenk- und/oder drehbar an einem Sitzteil (2) angeordnet ist, wobei der Verstellmechanismus (4) mit einer Abdeckung (5) abgedeckt ist **dadurch gekennzeichnet, dass** die Abdeckung zweiteilig vorgesehen ist, wobei ein erster Teil (6) aus einem vergleichsweise harten Kunststoffmaterial und ein zweiter Teil (7) aus einem vergleichsweise weichen Kunststoffmaterial gefertigt ist.

2. Fahrzeugsitz (1) nach Anspruch 1, **dadurch gekennzeichnet, dass** die Teile (6, 7) kraft-, form- und/oder stoffschlüssig miteinander verbunden sind.

3. Fahrzeugsitz (1) nach einem der voranstehenden Ansprüche, **dadurch gekennzeichnet, dass** in dem Teil (7) ein Schlitz (8), vorzugsweise ein T-förmiger Schlitz (8) vorgesehen ist.

4. Fahrzeugsitz (1) nach einem, der voranstehenden Ansprüche, **dadurch gekennzeichnet, dass** das Teil (7) mindestens eine, vorzugsweise zwei Lasche(n) (9) aufweist.

5. Fahrzeugsitz (1) nach einem der voranstehenden Ansprüche, **dadurch gekennzeichnet, dass** an dem Teil (7) mindestens eine Rippe (11) vorgesehen ist.

6. Fahrzeugsitz (1) nach einem der voranstehenden Ansprüchen, **dadurch gekennzeichnet, dass** das Teil (7) vorgespannt in dem Teil (6) vorgesehen ist.

7. Fahrzeugsitz (1) nach einem der voranstehenden Ansprüche, **dadurch gekennzeichnet, dass** der Verstellmechanismus einen Verriegelungsbolzen aufweist, der beim Verstellen der Rückenlehne aus dem Teil (6) der Abdeckung heraustritt.

## Claims

1. Vehicle seat (1) with a backrest (3) which is arranged on a seat part (2) pivotably and/or rotatably by means of an adjusting mechanism (4), the adjusting mechanism (4) being covered by a covering (5), **characterized in that** the covering is provided in two parts, a first part (6) being manufactured from comparatively hard plastic material and a second part (7) being manufactured from comparatively soft plastic material.

2. Vehicle seat (1) according to Claim 1, **characterized in that** the parts (6, 7) are connected to one another in a nonpositive, positive and/or materially integral manner.

3. Vehicle seat (1) according to one of the preceding claims, **characterized in that** a slot (8), preferably T-shaped slot (8), is provided in the part (7).

4. Vehicle seat (1) according to one of the preceding claims, **characterized in that** the part (7) has at least one, preferably two, tab(s) (9).

5. Vehicle seat (1) according to one of the preceding claims, **characterized in that** at least one rib (11) is provided on the part (7).

6. Vehicle seat (1) according to one of the preceding claims, **characterized in that** the part (7) is provided, prestressed, in the part (6).

7. Vehicle seat (1) according to one of the preceding claims, **characterized in that** the adjusting mechanism has a locking pin which emerges from the part (6) of the covering when the backrest is being adjusted.

## Revendications

1. Siège de véhicule (1) comprenant un dossier (3) qui est disposé sur une partie d'assise (2) de manière pivotante et/ou rotative au moyen d'un mécanisme de réglage (4), le mécanisme de réglage (4) étant recouvert d'un recouvrement (5), **caractérisé en ce que** le recouvrement est prévu en deux parties, une première partie (6) étant fabriquée en une matière plastique relativement dure et une deuxième partie (7) étant fabriquée en une matière plastique relativement souple.

2. Siège de véhicule (1) selon la revendication 1, **caractérisé en ce que** les parties (6, 7) sont reliées l'une à l'autre par engagement par force, par engagement par complémentarité de forme et/ou par liaison de matière.

3. Siège de véhicule (1) selon l'une quelconque des revendications précédentes, **caractérisé en ce qu'**une fente (8), de préférence une fente (8) en forme de T, est prévue dans la partie (7).

4. Siège de véhicule (1) selon l'une quelconque des revendications précédentes, **caractérisé en ce que** la partie (7) comprend au moins une, de préférence deux, languette(s) (9).

5. Siège de véhicule (1) selon l'une quelconque des revendications précédentes, **caractérisé en ce qu'**au moins une nervure (11) est prévue sur la partie (7).

6. Siège de véhicule (1) selon l'une quelconque des revendications précédentes, **caractérisé en ce que** la partie (7) est prévue de manière précontrainte dans la partie (6).

7. Siège de véhicule (1) selon l'une quelconque des revendications précédentes, **caractérisé en ce que** le mécanisme de réglage comprend une goupille de verrouillage qui sort de la partie (6) du recouvrement lors du réglage du dossier.
